# EUROPÄISCHE PATENTSCHRIFT

(11) **EP 3 143 304 B1**
(45) Veröffentlichungstag und Bekanntmachung des Hinweises auf die Patenterteilung: **06.07.2022**
(21) Anmeldenummer: 15723448.5
(22) Anmeldetag: 04.05.2015
(51) Int. Cl.: F16F 15/02, B32B 15/08, B23K 35/24, B32B 15/18, B32B 15/20, E04C 2/08, E04C 2/34

(54) **BAUELEMENT**
CONSTRUCTION ELEMENT
COMPOSANT

(30) Priorität: 15.05.2014 DE 102014007066
(43) Veröffentlichungstag der Anmeldung: 22.03.2017
(73) Patentinhaber: ThyssenKrupp Steel Europe AG, 47166 Duisburg (DE); thyssenkrupp AG, 45143 Essen (DE)
(72) Erfinder: KLAUKE, Peter, 58239 Schwerte (DE); KLEINSCHMIDT, Oliver, 44137 Dortmund (DE); LEWE, Tobias, 48147 Münster (DE)
(74) Vertreter: ThyssenKrupp Steel Europe AG
(86) Internationale Anmeldenummer: PCT/EP2015/059700
(87) Internationale Veröffentlichungsnummer: WO 2015/173047

(56) Entgegenhaltungen:
- EP-A1- 1 477 963
- EP-A2- 0 363 632
- DE-A1- 3 834 829
- US-A- 4 353 951
- US-A1- 2006 062 977

## Beschreibung

Die Erfindung betrifft die Verwendung eines Bauelements für eine Heißlöt- oder Schmelzschweißverbindung bestehend aus zwei metallischen Decklagen und einer zwischen den Decklagen angeordneten nichtmetallischen Kernschicht sowie eine schmelzgeschweißte Konstruktion durch die Verwendung mindestens eines solchen Bauelements.

Gattungsgemäße Bauelemente sind aus dem Stand der Technik bekannt. Der von der Anmelderin unter dem Handelsnamen Bondal^{®} vertriebene körperschalldämpfende Verbundwerkstoff besteht aus zwei Stahldeckblechen und einer dazwischen angeordneten viskoelastischen Kunststoffkernschicht, wobei die Kernschicht aus einem Acrylatoder Polyesterwerkstoff besteht. Ein Verbinden des körperschalldämpfenden Verbundwerkstoffes mit anderen Bauteilen beispielsweise durch Schweißen, insbesondere Widerstandsschweißen stellt in der Regel kein Problem dar. Zur Erhöhung der Widerstandsschweißeignung eines körperschalldämpfenden Verbundwerkstoffes können, wie in der Patentschrift DE 38 34 829 C2 offenbart, der Kunststoffkernschicht Schweißzusätze in Form von Ferrosiliziumpulver in einer Korngröße von 70 bis 130% der Dicke der Kunststoffschicht zugegeben werden. Ein Schmelzschweißen oder sogar Heißlöten kann bei derartigen Bauelementen nicht angewendet werden, da es im gesamten Bereich der Verbindungsnaht und auch in Teilen der Wärmeeinflusszone bei Temperaturen von oberhalb 250°C zu thermischen Zersetzungsreaktionen kommt. Infolge der Hitzeeinwirkung werden beim Schmelzschweißen neben zahlreichen Verbrennungsrückständen auch Mengen an Gase, hauptsächlich Kohlenstoffdioxid, gebildet, welches eine porenfreie Erstarrung der schmelzflüssigen Phase verhindert.

Ferner beschreibt die EP 1 477 963 A1 D1 ein mehrlagiges Element umfassend metallische und viskoelastische Schichten, wobei über eine hitzeaktivierende Klebschicht das mehrlagige Element mit einem metallischen Substrat verbunden wird. In der EP 0 363 632 A2 wird ein widerstandsschweißbares körperschalldämpfendes Blech umfassend zwei äußere Metalllagen und eine zwischen den Metalllagen angeordnete Kunststoffkernschicht, welche Ferrosiliziumpulver zwischen 5 und 10 Vol.-% enthält, beschrieben. Ein Verbundwerkstoff mit Kunststoffkernschicht enthaltend metallisches Pulver wird auch in der US 4,353,951 offenbart. Die US 2006/062977 A1 betrifft einen Verbundwerkstoff mit einer dauerhaften mechanischen und adhäsiven Verbindung zwischen den Metallplatten des schalldämpfenden Laminats, wobei diese Verbindung durch viele diskrete mechanische und elektrische Verbindungen zwischen den Metallblechen gewährleistet wird.

Hiervon ausgehend ist es Aufgabe der vorliegenden Erfindung, ein Bauelement vorzuschlagen, welches schmelzschweiß- und/oder heißlötgeeignet ist.

Die aufgezeigte Aufgabe wird dadurch gelöst, dass ein Bauelement für eine Heißlöt- oder Schmelzschweißverbindung verwendet wird, bestehend aus zwei metallischen Decklagen und einer zwischen den Decklagen angeordneten nichtmetallischen Kernschicht, dadurch gekennzeichnet, dass die nichtmetallische Kernschicht aus einem silikonhaltigen Werkstoff gebildet ist und die silikonhaltige Kernschicht desoxidative Elemente und/oder desoxidative Legierungen, welche mit einem Anteil zwischen 0,1 und maximal 5 Gew.-% bezogen auf die Kernschicht in der silikonhaltigen Kernschicht dispergiert sind, enthält.

Versuche haben gezeigt, dass silikonhaltige Werkstoffe kurzzeitig bis 800°C temperaturbeständig sind. Bei höheren Temperaturen, wie sie üblicherweise beim MIG- und M AG-Schweißen gegeben sind, zerfällt das Silizium im silikonhaltigen Werkstoff in sauerstoffhaltiger Atmosphäre wegen seiner hohen Affinität zum Sauerstoff in Siliziumdioxid. Durch die Reaktion des Siliziums mit dem Sauerstoff werden das Ausgasen der Metallschmelze und die Porenbildung im Bereich der Verbindungsnaht deutlich reduziert. Das gebildete Siliziumdioxid lagert sich in Form eines Silikates an der Verbindungsnahtoberfläche (Schweißnahtoberfläche) ab und kann bei Bedarf mechanisch entfernt werden. Nach Zugabe desoxidativer Elemente und/oder desoxidativer Legierungen in die silikonhaltige Kernschicht wurde überraschend festgestellt, dass während des gesamten Verbindungsprozesses (Schmelzschweißprozess) Sauerstoff abgebunden u. entweder über die Schweißschmelze in die Schlacke überführt oder aber im Zuge einer sog. Fällungsoxidation in Form fein verteilter, nicht metallischer Einschlüsse (NME) in der Schmelze abgeschieden werden, wodurch eine porenfreie Erstarrung ermöglicht wird. Mit den metallischen Decklagen kombiniert, besitzen erfindungsgemäße Bauelemente körperschalldämpfende Eigenschaften und können so für Konstruktionen vorzugsweise in der maritimen Industrie, wie beispielsweise im Schiffbau oder aber im Schienenverkehr, im Fahrzeugau, Flugzeugbau, der Rüstungsindustrie, dem Kraftwerksbau, dem Stahlhochbau und in allen Bereichen, in denen Verbindungen durch Heisslöten und/oder Schmelzschweißen hergestellt werden, bereitgestellt werden.

Erfindungsgemäß sind die desoxidativen Elemente und/oder desoxidativen Legierungen mit einem Anteil zwischen 0,1 und maximal 5 Gew.-% bezogen auf die Kernschicht in der silikonhaltigen Kernschicht dispergiert. Um eine ausreichende Haftung zwischen den metallischen Decklagen sicherzustellen, ist der Anteil der jeweiligen desoxidativen Elemente und / oder Legierungen auf maximal 5 Gew.-%, insbesondere auf maximal 3 Gew.-% und vorzugsweise auf maximal 1 ,5 Gew.-% begrenzt. Um die Sauerstoffabbindung während des Fügeprozesses zu begünstigen, beträgt der Anteil der desoxidativen Elemente und /oder desoxidativen Legierungen mindestens 0,1 Gew.-%, insbesondere mindestens 0,2 Gew.-% und vorzugsweise mindestens 0,25 Gew.-%. Als desoxidative Elemente eignen sich beispielsweise Ca, Mg, Al, Ti, Si, Mn, Cr, Ce, La, Nb, Ta, V und/oder Zn in Form von Pulver und/oder Flakes. Die vorgenannten Elemente können sowohl einzeln oder aber in Kombination, insbesondere auch mit anderen desoxidativen Elementen und/oder desoxidativen Legierungen wie beispielsweise Ferrosilizium (FeSi), Ferrocalciumsilizium (FeCa-Si), Ferromangan (FeMn) der silikonhaltigen Kernschicht zugegeben werden.

Eine weitere Ausgestaltung der Erfindung sieht vor, dass die metallischen Decklagen aus einem Stahl Werkstoff gebildet sind. Metallisch beschichtete oder unbeschichtete Stahlwerkstoffe, beispielsweise Baustähle sind relativ kostengünstig und eignen sich daher hervorragend für Konstruktionen vorzugsweise im Schiffbau bzw. Maschinenbau. Auch Leichtmetallwerkstoffe wie Aluminiumund Magnesiumwerkstoffe können als metallische Decklagen, wenn zusätzliches Gewicht am Bauelement eingespart werden soll, als auch in Kombination mit einem Stahlwerkstoff verwendet werden. Die metallischen Decklagen weisen eine Dicke von 0,2 bis 30 mm, insbesondere von 0,5 bis 10 mm, vorzugsweise von 1 bis 10 mm und besonders bevorzugt von 1,5 bis 5 mm auf.

In Kombination mit der silikonhaltigen Kernschicht, die eine Dicke von 0,01 bis 0,2 mm, insbesondere 0,02 bis 0,1 mm und bevorzugt 0,025 bis 0,05 mm aufweist, kann ein kostengünstiges Bauelement bereitgestellt werden. Die silikonhaltige Kernschicht kann in Form einer Folie, vorzugsweise als Klebefolie zwischen die metallischen Decklagen eingebracht werden.

In einem ersten Ausführungsbeispiel wurde ein erfindungsgemäßes Bauelement, das aus unbeschichteten Stahldecklagen der Güte S235JR+AR (nach EN 10025-2:2004-10) mit jeweils einer Dicke von 3,5 mm und einer dazwischen angeordneten silikonhaltigen Klebschicht (FT 3102, Fa. Avery Dennison) mit einer Dicke von 0,05 mm und dispergierten Aluminiumflakes (RO 500, Fa. Eckart) mit 0,75 Gew.-% bestand, mittels MAG- Schmelzschweißen im T-Stoß an einen Träger aus einem monolithischen Stahlwerkstoff verschweißt. Die Schmelzschweißnaht zeigte keine Poren oder Lunker auf. Derartige schmelzgeschweißte Konstruktionen sind im Schiffbau bzw. Maschinenbau zu finden.

In einem zweiten Ausführungsbeispiel wurde ein erfindungsgemäßes Bauelement mit der gleichen Zusammensetzung wie im ersten Ausführungsbeispiel gewählt, jedoch mit dem Unterschied, dass die Abmessungen des Bauelementes 1 .000 x 600 mm betrugen und in einer Stahldecklage Löcher/Bohrungen eingebracht wurden, beispielsweise in der Mitte und im Bereich der Ecken des Bauelementes. In diesen diskreten Bereichen lag die Kernschicht frei. Mittels MAG-Schmelzschweißen wurden die Löcher gefüllt. Die punktuelle Schmelzschweißverbindung zwischen den beiden Stahldeckblechen war poren- und lunkerfrei. Die Gefahr einer Delamination, beispielsweise während des Transports und beim Verladen insbesondere mittels Magnetkran, war damit unterbunden. Dadurch kann aber auch im eingebauten Zustand ein vorzeitiges Delaminieren beispielsweise im Brandfall verhindert werden.

## Patentansprüche

1. Verwendung eines Bauelements für eine Heißlöt- oder Schmelzschweißverbindung bestehend aus zwei metallischen Decklagen und einer zwischen
den Decklagen angeordneten nichtmetallischen Kernschicht,
**dadurch gekennzeichnet, dass**
die nichtmetallische Kernschicht aus einem silikonhaltigen Werkstoff gebildet ist und die silikonhaltige Kernschicht desoxidative Elemente und/oder desoxidative Legierungen, welche mit einem Anteil zwischen 0,1 und maximal 5 Gew.-% bezogen auf die Kernschicht in der silikonhaltigen Kernschicht dispergiert sind, enthält.

2. Verwendung eines Bauelements nach Anspruch 1,
**dadurch gekennzeichnet, dass**
die metallischen Decklagen aus einem metallisch beschichteten oder unbeschichteten Stahlwerkstoff, Aluminiumwerkstoff und/oder Magnesiumwerkstoff gebildet sind.

3. Verwendung eines Bauelements nach Anspruch 1 oder 2,
**dadurch gekennzeichnet, dass**
die metallischen Decklagen eine Dicke von 0,2 bis 30 mm, insbesondere von 0,5 bis 15 mm, vorzugsweise von 1 bis 10 mm und besonders bevorzugt von 1,5 bis 5 mm aufweisen.

4. Verwendung eines Bauelements nach einem der vorgenannten Ansprüche,
**dadurch gekennzeichnet, dass**
die silikonhaltige Kernschicht eine Dicke von 0,01 bis 0,2 mm, insbesondere 0,02 bis 0,1 mm, bevorzugt 0,025 bis 0,05 mm aufweist.

5. Schmelzgeschweißte Konstruktion, insbesondere in der maritimen Industrie, im Schienenverkehr, im Fahrzeug- u. Flugzeugbau, in der Rüstungsindustrie, im Kraftwerksbau, im Stahlhochbau durch die Verwendung mindestens eines Bauelements nach einem der Ansprüche 1 bis 4.

## Claims

1. Use of a construction element for a hot solder bond or fusion weld bond consisting of two metallic outer plies and a non-metallic core layer arranged between the outer plies, **characterized in that** the non-metallic core layer is formed of a silicone-containing material and the silicone-containing core layer comprises deoxidative elements and/or deoxidative alloys which are dispersed in the silicone-containing core layer in an amount of between 0.1% and not more than 5% by weight, based on the core layer.

2. Use of a construction element according to Claim 1, **characterized in that** the metallic outer plies are formed of a metallic coated or uncoated steel material, aluminum material and/or magnesium material.

3. Use of a construction element according to Claim 1 or 2, **characterized in that** the metallic outer plies have a thickness of 0.2 to 30 mm, in particular of 0.5 to 15 mm, preferably of 1 to 10 mm and particularly preferably of 1.5 to 5 mm.

4. Use of a construction element according to one of the preceding claims, **characterized in that** the silicone-containing core layer has a thickness of 0.01 to 0.2 mm, in particular of 0.02 to 0.1 mm, preferably of 0.025 to 0.05 mm.

5. Fusion-welded structure, in particular in the maritime industry, in railway transportation, in vehicle and aircraft construction, in the armaments industry, in power plant construction, in steel structural engineering, resulting from the use of at least one construction element according to one of Claims 1 to 4.

## Revendications

1. Utilisation d'un élément de construction destiné à une liaison brasée à chaud ou soudée par fusion et comprenant deux couches de recouvrement métalliques et d'une couche centrale non métallique disposée entre les couches de recouvrement, **caractérisée en ce que** la couche centrale non métallique est formée d'une matière contenant du silicium et la couche centrale contenant du silicium contient des éléments désoxydants et/ou des alliages désoxydants qui sont dispersés dans la couche centrale contenant du silicium dans une proportion comprise entre 0,1 et 5 % en poids maximum sur la base de la couche centrale.

2. Utilisation d'un élément de construction selon la revendication 1, **caractérisée en ce que** les couches de recouvrement métalliques sont formées d'une matière à base d'acier, d'une matière à base d'aluminium et/ou d'une matière à base de magnésium pourvues ou non pourvues d'un revêtement métallique.

3. Utilisation d'un élément de construction selon la revendication 1 ou 2, **caractérisée en ce que** les couches de recouvrement métalliques ont une épaisseur de 0,2 à 30 mm, en particulier de 0,5 à 15 mm, de préférence de 1 à 10 mm et de manière particulièrement préférée de 1,5 à 5 mm.

4. Utilisation d'un élément de construction selon l'une des revendications précédentes, **caractérisée en ce que** la couche centrale contenant du silicone a une épaisseur de 0,01 à 0,2 mm, en particulier de 0,02 à 0,1 mm, de préférence de 0,025 à 0,05 mm.

5. Construction soudée par fusion, notamment dans l'industrie maritime, dans le transport ferroviaire, dans la construction automobile et aéronautique, dans l'industrie de l'armement, dans la construction de centrales électriques, dans la construction à ossature métallique impliquant l'utilisation d'au moins un élément de construction selon l'une des revendications 1 à 4.
